# EUROPEAN PATENT APPLICATION

(11) **EP 4 715 013 A1**
(43) Date of publication of application: **25.03.2026**
(21) Application number: 24847659.0
(22) Date of filing: 18.04.2024
(51) Int. Cl.: C08L 81/02, C08L 81/04, H01M 10/613, H01M 10/625

(54) **HARMONICA-SHAPED TUBE AND MANUFACTURING METHOD, LIQUID COOLING PLATE, BATTERY, AND ELECTRIC DEVICE**

(30) Priority: 03.08.2023 CN 202310973120; 16.01.2024 CN 202410063245
(71) Applicant: Contemporary Amperex Technology Co., Limited, Ningde, Fujian 352100 (CN)
(72) Inventor: LIU, Lei, Ningde, Fujian 352100 (CN); PAN, Xin, Ningde, Fujian 352100 (CN); LIU, Yifei, Ningde, Fujian 352100 (CN)
(74) Representative: Gong, Jinping
(86) International application number: PCT/CN2024/088657
(87) International publication number: WO 2025/025693

(57) **Abstract**

This application discloses a harmonica tube and a preparation method thereof, a liquid cooling plate, a battery, and an electric apparatus, where a material of the harmonica tube includes a polyphenylene sulfide composition, and the polyphenylene sulfide composition includes a polyphenylene sulfide resin and a toughening agent; the toughening agent includes a copolymer of an olefin and a glycidyl ester. By providing the polyphenylene sulfide composition as the material for the harmonica tube, this application facilitates reducing issues such as material breakage or poor extrusion flow during extrusion molding, enabling the formed harmonica tube to exhibit excellent mechanical strength, deformation resistance, corrosion resistance, heat resistance, heat dissipation, and creep resistance, lowering the risk of cracking under pressure during use, and enhancing production capacity and product quality.

## Description

This application claims priority to Chinese Patent Application No. 2024100632452, filed on January 16, 2024, and entitled "HARMONICA TUBE AND PREPARATION METHOD THEREOF, LIQUID COOLING PLATE, BATTERY, AND ELECTRIC APPARATUS", which is incorporated herein by reference in its entirety.

### TECHNICAL FIELD

This application pertains to the field of battery technology, and specifically relating to a harmonica tube and a preparation method thereof, a liquid cooling plate, a battery, and an electric apparatus.

### BACKGROUND

This section provides only background information related to this application, which is not necessarily prior art.

Batteries, as a new generation of green energy storage and conversion devices, have been widely applied in fields such as portable electronic devices and electric vehicles. The heat dissipation capability of a battery is a critical performance factor affecting its normal operation. Typically, a liquid cooling plate is disposed between battery cells to achieve heat dissipation. Currently, liquid cooling plates still require improvements in material selection, forming processes, and performance metrics.

### SUMMARY

The primary technical problem addressed by this application is the need for improvements in liquid cooling plates regarding material selection, forming processes, and performance metrics.

According to a first aspect, an embodiment of this application provides a harmonica tube, where a material of the harmonica tube includes a polyphenylene sulfide composition, and the polyphenylene sulfide composition includes a polyphenylene sulfide resin and a toughening agent; and the toughening agent includes a copolymer of an olefin and a glycidyl ester.

An embodiment of this application modifies the polyphenylene sulfide resin with the toughening agent to form the polyphenylene sulfide composition, where the polyphenylene sulfide composition is suitable for extrusion molding, simplifying the processing technique. The formed harmonica tube exhibits excellent product performance, such as good dimensional stability, surface precision, mechanical properties (for example, strength, toughness, and elongation at break), deformation resistance, corrosion resistance, heat resistance, heat dissipation, and creep resistance, meeting operational conditions. This reduces issues such as material breakage or poor extrusion flow during extrusion molding, lowers the risk of cracking under pressure during use, and enhances production capacity and product quality.

In some embodiments, a number-average molecular weight of the polyphenylene sulfide resin is greater than or equal to 50000.

In an embodiment of this application, the number-average molecular weight of the polyphenylene sulfide resin being greater than or equal to 50000 results in higher viscosity, facilitating extrusion molding of the harmonica tube. Additionally, the polyphenylene sulfide resin with a number-average molecular weight greater than or equal to 50000 exhibits high rigidity, contributing to the formed harmonica tube having excellent mechanical strength, deformation resistance, corrosion resistance, heat resistance, heat dissipation, and creep resistance.

In some embodiments, the number-average molecular weight of the polyphenylene sulfide resin satisfies a range of 50000 to 10000.

In an embodiment of this application, the number-average molecular weight of the polyphenylene sulfide resin satisfying the range of 50000 to 10000 contributes to the formed harmonica tube having excellent mechanical strength, deformation resistance, corrosion resistance, heat resistance, heat dissipation, and creep resistance.

In some embodiments, the polyphenylene sulfide composition includes, by weight parts, 80 to 90 parts of the polyphenylene sulfide resin and 10 to 20 parts of the toughening agent.

In any embodiment, the polyphenylene sulfide resin may be included in an amount of 80, 81, 82, 83, 84, 85, 86, 87, 88, 89, or 90 parts by weight, or a range composed of any two of the aforementioned values, such as 80 to 85 parts, 83 to 88 parts, or 85 to 90 parts by weight. Within the above range, a lower amount of the polyphenylene sulfide resin by weight parts enhances the toughness of the formed harmonica tube, reducing issues such as material breakage or poor extrusion flow during extrusion molding, while a higher amount of the polyphenylene sulfide resin by weight parts improves the rigidity and dimensional stability of the formed harmonica tube. In any embodiment, the toughening agent may be included in an amount of 10, 11, 12, 13, 14, 15, 16, 17, 18, 19, or 20 parts by weight, or a range composed of any two of the aforementioned values, such as 10 to 15 parts, 12 to 18 parts, or 15 to 20 parts by weight. Within the above range, a higher amount of the toughening agent by weight parts improves the toughness of the harmonica tube, reducing issues such as material breakage or poor extrusion flow during extrusion molding, while a lower amount of the toughening agent by weight parts enhances the rigidity and dimensional stability of the formed harmonica tube.

In some embodiments, a melt index of the polyphenylene sulfide resin under conditions of 316°C and 10 kg satisfies a range of 55 g/10 min to 125 g/10 min.

In any embodiment, the melt index of the polyphenylene sulfide resin under conditions of 316°C and 10 kg may be 55 g/10 min, 60 g/10 min, 65 g/10 min, 70 g/10 min, 75 g/10 min, 80 g/10 min, 85 g/10 min, 90 g/10 min, 95 g/10 min, 100 g/10 min, 105 g/10 min, 110 g/10 min, 115 g/10 min, 120 g/10 min, or 125 g/10 min, or a range composed of any two of the aforementioned values, such as 55 g/10 min to 100 g/10 min, 80 g/10 min to 110 g/10 min, or 100 g/10 min to 125 g/10 min. Within the above range, a higher melt index improves the flowability of the polyphenylene sulfide resin, reducing issues such as material breakage or poor extrusion flow during extrusion molding, while a lower melt index enhances the rigidity of the polyphenylene sulfide resin, improving the mechanical strength and dimensional stability of the formed harmonica tube.

In some embodiments, the copolymer of the olefin and the glycidyl ester includes one or more of ethylene-glycidyl methacrylate (E-GMA), ethylene-methyl acrylate-glycidyl methacrylate terpolymer (E-MA-GMA), ethylene-octene copolymer grafted with glycidyl methacrylate (POE-GMA), and styrene-butadiene-styrene block copolymer grafted with glycidyl methacrylate (SBS-GMA).

In an embodiment of this application, the provided copolymer of the olefin and the glycidyl ester improves the toughness of the polyphenylene sulfide composition, reducing issues such as material breakage or poor extrusion flow during extrusion molding.

In some embodiments, a melt index of the copolymer of the olefin and the glycidyl ester under conditions of 190°C and 2.16 kg satisfies a range of 4 g/10 min to 10 g/10 min.

In any embodiment, the melt index of the copolymer of the olefin and the glycidyl ester under conditions of 190°C and 2.16 kg may be 4 g/10 min, 4.5 g/10 min, 5 g/ 10 min, 5.5 g/ 10 min, 6 g/10 min, 6.5 g/10 min, 7 g/10 min, 7.5 g/10 min, 8 g/10 min, 8.5 g/10 min, 9 g/10 min, 9.5 g/10 min, or 10 g/10 min, or a range composed of any two of the aforementioned values, such as 4 g/10 min to 6 g/10 min, 6 g/10 min to 8 g/10 min, or 8 g/10 min to 10 g/10 min. Within the above range, a higher melt index enhances the flowability of the copolymer of the olefin and the glycidyl ester, improving its compatibility with the polyphenylene sulfide resin, while a lower melt index enhances its ability to toughen the polyphenylene sulfide resin, reducing issues such as material breakage or poor extrusion flow during extrusion molding.

In some embodiments, the polyphenylene sulfide composition further includes an antioxidant.

In an embodiment of this application, the addition of the antioxidant delays the aging of the harmonica tube, extending the service life of the harmonica tube.

In some embodiments, the polyphenylene sulfide composition further includes, by weight parts, less than or equal to 0.5 parts of the antioxidant.

In any embodiment, the polyphenylene sulfide composition may further include 0, 0.05, 0.10, 0.15, 0.20, 0.25, 0.30, 0.35, 0.40, 0.45, or 0.50 parts by weight of the antioxidant, or a range composed of any two of the aforementioned values, such as 0 to 0.20 parts, 0.20 to 0.50 parts, or 0.30 to 0.45 parts by weight. Within the above range, a lower amount of the antioxidant by weight parts improves the distribution uniformity of the antioxidant in the polyphenylene sulfide resin, reduces raw material costs of the antioxidant, and minimizes resource consumption and environmental pollution caused by the use of the antioxidant, while a higher amount of the antioxidant by weight parts delays the aging process of the harmonica tube, extending the service life of the harmonica tube.

In some embodiments, the polyphenylene sulfide composition further includes, by weight parts, 0.2 to 0.5 parts of the antioxidant.

In an embodiment of this application, within the above range of antioxidant weight parts, the distribution uniformity of the antioxidant in the polyphenylene sulfide resin is improved, delaying the aging process of the harmonica tube and extending the service life of the harmonica tube.

In some embodiments, the antioxidant includes one or both of N,N'-bis-(3-(3,5-di-tert-butyl-4-hydroxyphenyl)propionyl)hexanediamine and tris[2,4-di-tert-butylphenyl]phosphite.

The antioxidant may include only N,N'-bis-(3-(3,5-di-tert-butyl-4-hydroxyphenyl)propionyl)hexanediamine, only tris[2,4-di-tert-butylphenyl]phosphite, or both N,N'-bis-(3- (3,5-di-tert-butyl-4-hydroxyphenyl)propionyl)hexanediamine and tris[2,4-di-tert-butylphenyl]phosphite. In some embodiments, a weight ratio of N,N'-bis-(3-(3,5-di-tert-butyl-4-hydroxyphenyl)propionyl)hexanediamine to tris[2,4-di-tert-butylphenyl]phosphite may be from 0:1 to 1:0. In some embodiments, the weight ratio of N,N'-bis-(3-(3,5-di-tert-butyl-4-hydroxyphenyl)propionyl)hexanediamine to tris[2,4-di-tert-butylphenyl]phosphite may be 1:0, 1:0.1, 1:0.2, 1:0.3, 1:0.4, 1:0.5, 1:0.6, 1:0.7, 1:0.8, 1:0.9, 1:1, 0:1, 0.1:1, 0.2:1, 0.3:1, 0.4:1, 0.5:1, 0.6:1, 0.7:1, 0.8:1, or 0.9: 1, or a range composed of any two of the aforementioned values, such as (0.4 to 0.6):(0.4 to 0.6), (0.6 to 0.8):(0.6 to 0.8), or (0.5 to 1):(0.1 to 0.4).

According to a second aspect, an embodiment of this application provides a preparation method of a harmonica tube, including:
providing a polyphenylene sulfide composition; and
performing a forming process on the polyphenylene sulfide composition to obtain the harmonica tube;
where the polyphenylene sulfide composition includes a polyphenylene sulfide resin and a toughening agent; and the toughening agent includes a copolymer of an olefin and a glycidyl ester.

In an embodiment of this application, a harmonica tube made of the polyphenylene sulfide composition exhibits excellent mechanical strength, deformation resistance, corrosion resistance, heat resistance, heat dissipation, and creep resistance, lowering the risk of cracking under pressure during use and enhancing production capacity and product quality.

In some embodiments, the step of performing the forming process on the polyphenylene sulfide composition includes:
adding the polyphenylene sulfide composition to a twin-screw extruder for extrusion molding.

In an embodiment of this application, preparing the harmonica tube through the extrusion molding process offers advantages such as continuous production and high efficiency.

In some embodiments, a screw rotation speed of the twin-screw extruder is 300 rpm to 500 rpm.

In some embodiments, zone temperature settings of the twin-screw extruder include: zone 1 temperature of 100°C to 120°C, zone 2 temperature of 280°C to 290°C, zone 3 temperature of 290°C to 310°C, zone 4 temperature of 300°C to 310°C, zone 5 temperature of 290°C to 300°C, zone 6 temperature of 290°C to 300°C, zone 7 temperature of 300°C to 310°C, zone 8 temperature of 300°C to 310°C, zone 9 temperature of 290°C to 310°C, and die temperature of 300°C to 320°C.

In an embodiment of this application, the settings of the above extrusion molding process parameters ensure that issues such as material breakage or poor extrusion flow are minimized during the formation of the harmonica tube. The formed harmonica tube exhibits excellent mechanical strength, deformation resistance, corrosion resistance, heat resistance, heat dissipation, and creep resistance, lowering the risk of cracking under pressure during use and enhancing production capacity and product quality.

According to a third aspect, an embodiment of this application provides a liquid cooling plate, where the liquid cooling plate includes any harmonica tube provided in the first aspect or a harmonica tube prepared by the preparation method provided in the second aspect.

According to a fourth aspect, an embodiment of this application provides a battery, including the liquid cooling plate provided in the third aspect.

According to a fifth aspect, an embodiment of this application provides an electric apparatus, including the battery provided in the fourth aspect. When the battery of the electric apparatus employs the provided liquid cooling plate, the electric apparatus at least possesses the same advantages as the battery, enhancing the heat dissipation performance of the electric apparatus.

The above description is only an overview of the technical solutions of this application. To provide a clearer understanding of the technical means of this application, the content of the specification can be implemented, and to make the above and other objectives, features, and advantages of this application more apparent and understandable, specific embodiments of this application are provided below.

### BRIEF DESCRIPTION OF DRAWINGS

To more clearly illustrate the technical solutions of the embodiments of this application, the drawings required for use in the embodiments of this application are briefly introduced below. Apparently, the drawings described below are only some embodiments of this application, and those of ordinary skill in the art can obtain other drawings based on these drawings without creative effort.
FIG. 1 is a schematic structural diagram of a vehicle according to some embodiments of this application;
FIG. 2 is a schematic exploded structural view of a battery according to some embodiments of this application;
FIG. 3 is a schematic structural diagram of a liquid cooling assembly according to some embodiments of this application; and
FIG. 4 is a schematic exploded structural view of a battery cell according to some embodiments of this application.

### Description of reference signs:

1000-vehicle, 100-battery, 200-controller, 300-motor, 400-battery module, 10-box, 20-battery cell, 30-liquid cooling plate, 11-first portion, 12-second portion, 21-end cover, 22-housing, 23-electrode assembly, 21a-electrode terminal, 23a-tab, 401-end plate, and 402-side plate.

### DESCRIPTION OF EMBODIMENTS

To make the objectives, technical solutions, and effects of this application clearer and more explicit, the embodiments of the technical solutions of this application are described in detail below with reference to the drawings. The following embodiments are only used to more clearly illustrate the technical solutions of this application and thus serve as examples, not limiting the scope of protection of this application.

Unless otherwise defined, all technical and scientific terms used herein have the same meanings as commonly understood by those skilled in the technical field of this application; the terms used herein are for the purpose of describing specific embodiments only and are not intended to limit this application; the terms "include" and "have" and any variations thereof in the specification, claims, and descriptions of the drawings of this application are intended to cover non-exclusive inclusion.

In the description of the embodiments of this application, technical terms such as "first" and "second" are used only to distinguish different objects and should not be construed as indicating or implying relative importance or implicitly indicating the number, specific order, or primary-secondary relationship of the technical features indicated. In the description of the embodiments of this application, the term "a plurality of" means two or more (inclusive). Similarly, "a plurality of groups" means two or more (inclusive) groups, and "a plurality of pieces" means two or more (inclusive) pieces, unless otherwise specifically defined.

Reference to "embodiment" herein means that a particular feature, structure, or characteristic described in connection with the embodiment may be included in at least one embodiment of this application. The term "embodiment" appearing in various places in the specification does not necessarily refer to the same embodiment or an independent or alternative embodiment exclusive of other embodiments. Those skilled in the art explicitly and implicitly understand that the embodiments described herein may be combined with other embodiments.

In the description of the embodiments of this application, the term "and/or" merely describes an association relationship between associated objects, indicating three possible relationships: A alone, A and B together, or B alone. Additionally, the character "/" in this document generally indicates an "or" relationship between the associated objects.

Quantities, ratios, and other numerical values are presented herein in a range format. It should be understood that such range formats are used for convenience and brevity and should be flexibly interpreted to include not only the values explicitly specified as the range limits but also all individual values or sub-ranges encompassed within the range, as if each value and sub-range were explicitly specified.

Harmonica tubes are applied in the field of heat dissipation for new energy batteries, serving as critical components affecting battery lifespan and range. Harmonica tubes typically have multiple heat exchange medium channels to allow the heat exchange medium to absorb and transfer heat through these channels. Currently, some harmonica tubes are made of metal materials, such as aluminum, which involve complex forming processes and high raw material costs, and require addressing insulation issues with other components. Some harmonica tubes are made of plastic materials to simplify the forming process, reduce raw material costs, and achieve good insulation performance. However, general plastic materials are susceptible to corrosion by the heat exchange medium, accelerating the aging of the harmonica tube, which may lead to cracking and affect normal use of the harmonica tube, reducing the service life of the harmonica tube. For example, in harmonica tubes made of polyamide, the amide bonds in polyamide easily form reactive functional groups such as hydrogen bonds, which readily react with heat exchange media such as water or ethylene glycol, making the harmonica tube prone to corrosion. Additionally, due to the segmented structure of polyamide, harmonica tubes made from it exhibit lower mechanical strength, deformation resistance, heat resistance, and creep resistance.

Due to the complex structure of harmonica tubes, in some solutions, extrusion molding is used to form plastic harmonica tubes, offering a simple and efficient forming process suitable for the irregular structure of harmonica tubes. However, general plastic materials during the extrusion molding process, if highly flexible, tend to result in poor mechanical properties that fail to meet product requirements. If highly rigid, they are prone to high tensile strength and low elongation at break, leading to issues such as material breakage or poor extrusion flow during extrusion molding, affecting production capacity and product quality.

According to a first aspect, an embodiment of this application provides a harmonica tube, where a material of the harmonica tube includes a polyphenylene sulfide composition, and the polyphenylene sulfide composition includes a polyphenylene sulfide resin and a toughening agent. The toughening agent includes a copolymer of an olefin and a glycidyl ester.

The polyphenylene sulfide resin (Polyphenylene Sulfide, PPS) refers to a thermoplastic resin with a molecular backbone composed of alternating benzene rings and sulfur atoms. Due to partial overlap of π-electrons in the benzene rings, the energy is further reduced, forming a stable conjugated structure. The benzene ring structure imparts excellent mechanical properties, deformation resistance, heat resistance, and creep resistance to the polyphenylene sulfide resin, while the sulfide bonds provide flexibility to the polyphenylene sulfide resin, contributing to a certain level of fracture resistance, facilitating extrusion molding of the harmonica tube. The number-average molecular weight is determined by calculating the size of the polyphenylene sulfide resin molecules based on the number of molecules, that is, the ratio of the total mass of molecules to the total number of molecules. Polyphenylene sulfide resins are categorized into low molecular weight and high molecular weight types. Low molecular weight polyphenylene sulfide resins have a number-average molecular weight ranging from 4000 to 5000 and are difficult to directly mold. High molecular weight polyphenylene sulfide resins have a number-average molecular weight greater than 10000 and can be used directly for processing plastic products without crosslinking. The toughening agent refers to a substance that enhances the flexibility of the polyphenylene sulfide resin. The copolymer of the olefin and the glycidyl ester refers to a product formed by copolymerization of an olefin and a glycidyl ester. During the process of toughening the polyphenylene sulfide resin with the copolymer of the olefin and the glycidyl ester as the toughening agent, the epoxy bonds in the glycidyl ester undergo a ring-opening reaction, and an esterification reaction occurs between the hydroxyl and acid groups at the chain ends of the polyphenylene sulfide resin, grafting the molecules of the copolymer of the olefin and the glycidyl ester onto the molecular chain of the polyphenylene sulfide resin. This increases the flexibility of the chain segments of the polyphenylene sulfide resin. Additionally, since the copolymer of the olefin and the glycidyl ester also contains olefin segments, while the glycidyl ester toughens the polyphenylene sulfide resin, the olefin segments of the copolymer of the olefin and the glycidyl ester are also incorporated into the molecular chain of the polyphenylene sulfide resin. Due to the good flexibility of olefins, the olefin and the glycidyl ester synergistically act on the polyphenylene sulfide resin and further enhance the flexibility of the polyphenylene sulfide composition. The molecular structure and functional groups of the harmonica tube material can be analyzed by examining the infrared spectrum of the material, comparing the characteristic absorption peaks of the infrared spectrum with those of known compounds or standard spectra. For example, based on the infrared spectrum of the harmonica tube material compared with known compounds or standard spectra, the material is determined to include functional groups such as benzene rings, sulfide bonds, olefins, ester groups, hydroxyl groups, and alkyl groups. The presence of benzene rings and sulfide bonds indicates through a reverse qualitative analysis that the harmonica tube material includes polyphenylene sulfide, the presence of olefins indicates through a reverse qualitative analysis that the harmonica tube material includes olefins, and the presence of olefins, ester groups, hydroxyl groups, and alkyl groups indicates through a reverse qualitative analysis that the harmonica tube material includes a copolymer of the glycidyl ester.

An embodiment of this application modifies the polyphenylene sulfide resin with the toughening agent to form the polyphenylene sulfide composition, where the polyphenylene sulfide composition is suitable for extrusion molding, simplifying the processing technique. The formed harmonica tube exhibits excellent product performance, such as good dimensional stability, surface precision, mechanical properties (for example, strength, toughness, and elongation at break), deformation resistance, corrosion resistance, heat resistance, heat dissipation, and creep resistance, meeting operational conditions. This reduces issues such as material breakage or poor extrusion flow during extrusion molding, lowers the risk of cracking under pressure during use, and enhances production capacity and product quality.

In some embodiments, a number-average molecular weight of the polyphenylene sulfide resin is greater than or equal to 50000.

In any embodiment, the number-average molecular weight of the polyphenylene sulfide resin may be greater than or equal to 50000, 60000, 65000, 70000, 75000, 80000, 85000, 90000, 95000, or 100000, or a range composed of any two of the aforementioned values, such as 50000 to 80000, 70000 to 90000, or 90000 to 100000. Within the above range, a higher number-average molecular weight of the polyphenylene sulfide resin enhances its rigidity, contributing to the harmonica tube having excellent mechanical strength, deformation resistance, corrosion resistance, heat resistance, heat dissipation, and creep resistance, while a lower number-average molecular weight improves its processability, facilitating extrusion processing with the toughening agent.

In an embodiment of this application, the number-average molecular weight of the polyphenylene sulfide resin being greater than or equal to 50000 results in higher viscosity, facilitating extrusion molding of the harmonica tube. Additionally, the polyphenylene sulfide resin with a number-average molecular weight greater than or equal to 50000 exhibits high rigidity, contributing to the formed harmonica tube having excellent mechanical strength, deformation resistance, corrosion resistance, heat resistance, heat dissipation, and creep resistance.

In some embodiments, the number-average molecular weight of the polyphenylene sulfide resin satisfies a range of 50000 to 10000.

In an embodiment of this application, the number-average molecular weight of the polyphenylene sulfide resin satisfying the range of 50000 to 10000 contributes to the formed harmonica tube having excellent mechanical strength, deformation resistance, corrosion resistance, heat resistance, heat dissipation, and creep resistance.

In some embodiments, the polyphenylene sulfide composition includes, by weight parts, 80 to 90 parts of the polyphenylene sulfide resin and 10 to 20 parts of the toughening agent.

In any embodiment, the polyphenylene sulfide resin may be included in an amount of 80, 81, 82, 83, 84, 85, 86, 87, 88, 89, or 90 parts by weight, or a range composed of any two of the aforementioned values, such as 80 to 85 parts, 83 to 88 parts, or 85 to 90 parts by weight. Within the above range, a lower amount of the polyphenylene sulfide resin by weight parts enhances the toughness of the formed harmonica tube, reducing issues such as material breakage or poor extrusion flow during extrusion molding, while a higher amount of the polyphenylene sulfide resin by weight parts improves the rigidity and dimensional stability of the harmonica tube. In any embodiment, the toughening agent may be included in an amount of 10, 11, 12, 13, 14, 15, 16, 17, 18, 19, or 20 parts by weight, or a range composed of any two of the aforementioned values, such as 10 to 15 parts, 12 to 18 parts, or 15 to 20 parts by weight. Within the above range, a higher amount of the toughening agent by weight parts improves the toughness of the harmonica tube, reducing issues such as material breakage or poor extrusion flow during extrusion molding, while a lower amount of the toughening agent by weight parts enhances the rigidity and dimensional stability of the formed harmonica tube.

In some embodiments, a melt index of the polyphenylene sulfide resin under conditions of 316°C and 10 kg satisfies a range of 55 g/10 min to 125 g/10 min.

The melt index, also known as the melt flow rate or melt index, is a numerical value indicating the flowability of a plastic material during processing. It is established by the American Society for Testing and Materials (ASTM) based on the method used by American DuPont Company (DuPont) for characterizing plastics. The test method involves melting plastic pellets into a fluid, then measuring the mass (in grams) extruded through a 2.1 mm diameter tube under specific temperature and pressure conditions (varying by material standard) within a certain time (10 minutes). A higher value indicates better processing flowability, while a lower value indicates poorer flowability.

In any embodiment, the melt index of the polyphenylene sulfide resin under conditions of 316°C and 10 kg may be 55 g/10 min, 60 g/10 min, 65 g/10 min, 70 g/10 min, 75 g/10 min, 80 g/10 min, 85 g/10 min, 90 g/10 min, 95 g/10 min, 100 g/10 min, 105 g/10 min, 110 g/10 min, 115 g/10 min, 120 g/10 min, or 125 g/10 min, or a range composed of any two of the aforementioned values, such as 55 g/10 min to 100 g/10 min, 80 g/10 min to 110 g/10 min, or 100 g/10 min to 125 g/10 min. Within the above range, a higher melt index improves the flowability of the polyphenylene sulfide resin, reducing issues such as material breakage or poor extrusion flow during extrusion molding, while a lower melt index enhances the rigidity of the polyphenylene sulfide resin, improving the mechanical strength and dimensional stability of the formed harmonica tube.

In some embodiments, the copolymer of the olefin and the glycidyl ester includes one or more of ethylene-glycidyl methacrylate (E-GMA), ethylene-methyl acrylate-glycidyl methacrylate terpolymer (E-MA-GMA), ethylene-octene copolymer grafted with glycidyl methacrylate (POE-GMA), and styrene-butadiene-styrene block copolymer grafted with glycidyl methacrylate (SBS-GMA).

In an embodiment of this application, the provided copolymer of the olefin and the glycidyl ester improves the toughness of the polyphenylene sulfide composition, reducing issues such as material breakage or poor extrusion flow during extrusion molding.

In some embodiments, a melt index of the copolymer of the olefin and the glycidyl ester under conditions of 190°C and 2.16 kg satisfies a range of 4 g/10 min to 10 g/10 min.

In any embodiment, the melt index of the copolymer of the olefin and the glycidyl ester under conditions of 190°C and 2.16 kg may be 4 g/10 min, 4.5 g/10 min, 5 g/ 10 min, 5.5 g/ 10 min, 6 g/10 min, 6.5 g/10 min, 7 g/10 min, 7.5 g/10 min, 8 g/10 min, 8.5 g/10 min, 9 g/10 min, 9.5 g/10 min, or 10 g/10 min, or a range composed of any two of the aforementioned values, such as 4 g/10 min to 6 g/10 min, 6 g/10 min to 8 g/10 min, or 8 g/10 min to 10 g/10 min. Within the above range, a higher melt index enhances the flowability of the copolymer of the olefin and the glycidyl ester, improving its compatibility with the polyphenylene sulfide resin, while a lower melt index enhances its ability to toughen the polyphenylene sulfide resin, reducing issues such as material breakage or poor extrusion flow during extrusion molding.

In some embodiments, the polyphenylene sulfide composition further includes an antioxidant.

The antioxidant is an additive used to delay the oxidation process of the polyphenylene sulfide resin during the manufacturing, processing, storage, and application of the harmonica tube.

In an embodiment of this application, the addition of the antioxidant delays the aging of the harmonica tube, extending the service life of the harmonica tube.

In some embodiments, the polyphenylene sulfide composition further includes, by weight parts, less than or equal to 0.5 parts of the antioxidant.

In any embodiment, the polyphenylene sulfide composition may further include 0, 0.05, 0.10, 0.15, 0.20, 0.25, 0.30, 0.35, 0.40, 0.45, or 0.50 parts by weight of the antioxidant, or a range composed of any two of the aforementioned values, such as 0 to 0.20 parts, 0.20 to 0.50 parts, or 0.30 to 0.45 parts by weight. Within the above range, a lower amount of the antioxidant improves the distribution uniformity of the antioxidant in the polyphenylene sulfide resin, reduces raw material costs of the antioxidant, and minimizes resource consumption and environmental pollution caused by the use of the antioxidant, while a higher amount delays the aging process of the harmonica tube, extending the service life of the harmonica tube.

In some embodiments, the polyphenylene sulfide composition further includes, by weight parts, 0.2 to 0.5 parts of the antioxidant.

In an embodiment of this application, within the above range of antioxidant weight parts, the distribution uniformity of the antioxidant in the polyphenylene sulfide resin is improved, delaying the aging process of the harmonica tube and extending the service life of the harmonica tube.

In some embodiments, the antioxidant includes one or both of N,N'-bis-(3-(3,5-di-tert-butyl-4-hydroxyphenyl)propionyl)hexanediamine and tris[2,4-di-tert-butylphenyl]phosphite.

N,N'-bis-(3-(3,5-di-tert-butyl-4-hydroxyphenyl)propionyl)hexanediamine refers to antioxidant 1098, with a CAS (chemical abstracts service, Chemical Abstracts Service) number of 23128-74-7. Tris[2,4-di-tert-butylphenyl]phosphite refers to antioxidant 168, with a CAS number of 31570-04-4.

The antioxidant may include only N,N'-bis-(3-(3,5-di-tert-butyl-4-hydroxyphenyl)propionyl)hexanediamine, only tris[2,4-di-tert-butylphenyl]phosphite, or both N,N'-bis-(3-(3,5-di-tert-butyl-4-hydroxyphenyl)propionyl)hexanediamine and tris[2,4-di-tert-butylphenyl]phosphite. In some embodiments, a weight ratio of N,N'-bis-(3-(3,5-di-tert-butyl-4-hydroxyphenyl)propionyl)hexanediamine to tris[2,4-di-tert-butylphenyl]phosphite may be from 0:1 to 1:0. In some embodiments, the weight ratio may be 1:0, 1:0.1, 1:0.2, 1:0.3, 1:0.4, 1:0.5, 1:0.6, 1:0.7, 1:0.8, 1:0.9, 1:1, 0:1, 0.1:1, 0.2:1, 0.3:1, 0.4:1, 0.5:1, 0.6:1, 0.7:1, 0.8:1, or 0.9:1, or a range composed of any two of the aforementioned values, such as (0.4 to 0.6):(0.4 to 0.6), (0.6 to 0.8):(0.6 to 0.8), or (0.5 to 1):(0.1 to 0.4).

According to a second aspect, an embodiment of this application provides a preparation method of a harmonica tube, including:
providing a polyphenylene sulfide composition; and
performing a forming process on the polyphenylene sulfide composition to obtain the harmonica tube;
where the polyphenylene sulfide composition includes a polyphenylene sulfide resin and a toughening agent; and the toughening agent includes a copolymer of an olefin and a glycidyl ester.

In an embodiment of this application, a harmonica tube made of the polyphenylene sulfide composition exhibits excellent mechanical strength, deformation resistance, corrosion resistance, heat resistance, heat dissipation, and creep resistance, lowering the risk of cracking under pressure during use and enhancing production capacity and product quality.

In some embodiments, the step of performing a forming process on the polyphenylene sulfide composition includes:
adding the polyphenylene sulfide composition to a twin-screw extruder for extrusion molding.

In some embodiments, the polyphenylene sulfide resin and the toughening agent are mixed to form a premix; and the premix is added to the twin-screw extruder for extrusion molding, where the polyphenylene sulfide resin and the toughening agent may be added through different feed ports into the screw to form the premix. In some embodiments, the process parameters of extrusion molding are adjusted according to the properties of the polyphenylene sulfide resin and the toughening agent.

In an embodiment of this application, preparing the harmonica tube through the extrusion molding process offers advantages such as continuous production and high efficiency.

In some embodiments, a ratio of the screw length to a diameter of the twin-screw extruder is 40, 48, or 64.

In some embodiments, the screw of the twin-screw extruder is provided with two or more shear block zones and one reverse thread zone, resulting in denser material packing and better injection molding appearance.

In some embodiments, an angle of the shear block of the screw of the twin-screw extruder is 30°, 45°, 60°, and/or 90°, with a larger angle resulting in stronger shear force.

In some embodiments, an external cooling water temperature of the twin-screw extruder is 40°C to 60°C.

In some embodiments, a screw rotation speed of the twin-screw extruder is 300 rpm to 500 rpm. In any embodiment, the screw rotation speed of the twin-screw extruder may be 300 rpm, 350 rpm, 400 rpm, 450 rpm, or 500 rpm, or a range composed of any two of the aforementioned values, such as 300 rpm to 400 rpm, 350 rpm to 450 rpm, or 400 rpm to 500 rpm. In an embodiment of this application, regulating the screw rotation speed of the twin-screw extruder ensures favorable extrusion conditions for the polyphenylene sulfide resin and the toughening agent.

In some embodiments, zone temperature settings of the twin-screw extruder include: zone 1 temperature of 100°C to 120°C, zone 2 temperature of 280°C to 290°C, zone 3 temperature of 290°C to 310°C, zone 4 temperature of 300°C to 310°C, zone 5 temperature of 290°C to 300°C, zone 6 temperature of 290°C to 300°C, zone 7 temperature of 300°C to 310°C, zone 8 temperature of 300°C to 310°C, zone 9 temperature of 290°C to 310°C, and die temperature of 300°C to 320°C.

In an embodiment of this application, the settings of the above extrusion molding process parameters ensure that issues such as material breakage or poor extrusion flow are minimized during the formation of the harmonica tube. The formed harmonica tube exhibits excellent mechanical strength, deformation resistance, corrosion resistance, heat resistance, heat dissipation, and creep resistance, lowering the risk of cracking under pressure during use and enhancing production capacity and product quality.

According to a third aspect, an embodiment of this application provides a liquid cooling plate, where the liquid cooling plate includes any harmonica tube provided in the first aspect or a harmonica tube prepared by the preparation method provided in the second aspect.

The liquid cooling plate is used to dissipate heat generated by battery cells in high-temperature or fast-charging environments, reducing high-temperature alarms and safety incidents caused by heat accumulation in battery modules, maintaining the battery cells in a relatively constant temperature working environment, and extending the service life of the battery cells.

In an embodiment of this application, the provided liquid cooling plate, incorporating the given harmonica tube, at least possesses the same advantages as the harmonica tube, exhibiting excellent mechanical strength, deformation resistance, corrosion resistance, heat resistance, heat dissipation, and creep resistance, lowering the risk of cracking under pressure during use and enhancing production capacity and product quality.

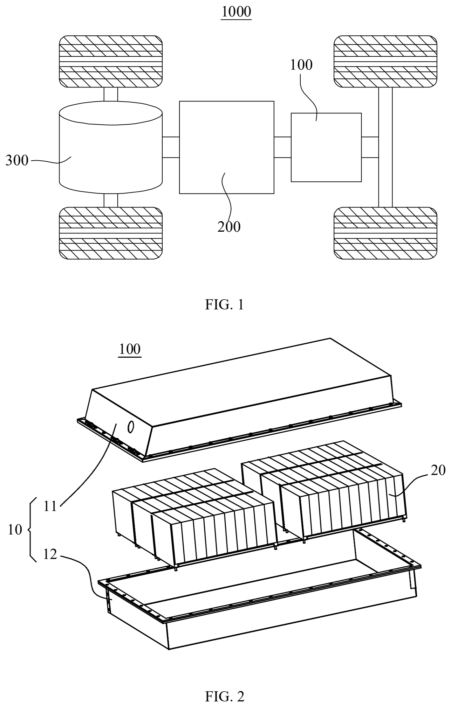

Referring to FIG. 1, FIG. 1 is a schematic structural diagram of a vehicle according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. A battery 100 is disposed inside the vehicle 1000, and the battery 100 may be positioned at the bottom, front, or rear of the vehicle 1000. The battery 100 may be configured to supply power to the vehicle 1000. For example, the battery 100 may be used as an operational power supply for the vehicle 1000. The vehicle 1000 may further include a controller 200 and a motor 300, where the controller 200 is configured to control the battery 100 to supply power to the motor 300, for example, for the operational power requirements during starting, navigation, and driving of the vehicle 1000.

In some embodiments of this application, the battery 100 can be used not only as the operational power source for the vehicle 1000 but also as a driving power source for the vehicle 1000, replacing or partially replacing fossil fuel or natural gas to provide driving traction for the vehicle 1000.

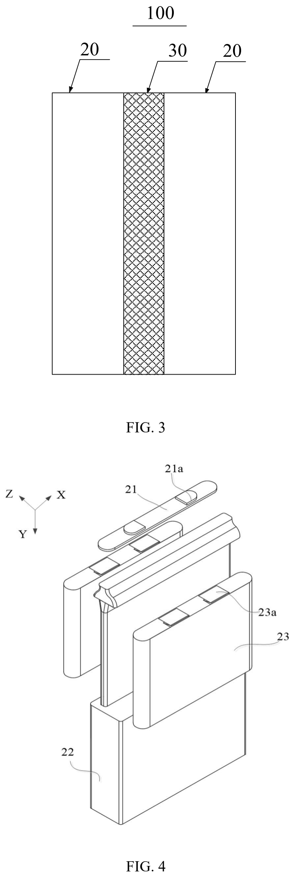

Referring to FIG. 2 and FIG. 3, FIG. 2 is a schematic exploded structural view of a battery according to some embodiments of this application, and FIG. 3 is a schematic structural diagram of a liquid cooling assembly according to some embodiments of this application. The battery 100 includes any liquid cooling plate 30 provided in the embodiments of this application and at least two oppositely disposed battery cells 20, with the liquid cooling plate 30 disposed between two adjacent battery cells 20. The liquid cooling plate 30 includes any harmonica tube provided in the first aspect or a harmonica tube prepared by the preparation method provided in the second aspect, as well as a cooling medium filled in the harmonica tube. The battery 100 further includes a box 10, with the battery cells 20 accommodated within the box 10. The box 10 is configured to provide an accommodation space for the battery cells 20 and may adopt various structures. In some embodiments, the box 10 may include a first portion 11 and a second portion 12, where the first portion 11 and the second portion 12 cover each other, jointly defining an accommodation space for the battery cells 20. The second portion 12 may be a hollow structure with an opening at one end, and the first portion 11 may be a plate-like structure covering the open side of the second portion 12, such that the first portion 11 and the second portion 12 together define the accommodation space; alternatively, both the first portion 11 and the second portion 12 may be hollow structures with an opening on one side, with the open side of the first portion 11 covering the open side of the second portion 12. The box 10 formed by the first portion 11 and the second portion 12 may have various shapes, such as a cylinder or a cuboid. In the battery 100, a plurality of battery cells 20 may be provided, and the plurality of battery cells 20 may be connected in series, parallel, or series-parallel, where series-parallel connection refers to a combination of series and parallel connections of the plurality of battery cells 20.

The plurality of battery cells 20 may be directly connected in series, parallel, or series-parallel, and the entirety of the plurality of battery cells 20 is accommodated in the box 10. Alternatively, the battery 100 may be formed by first connecting a plurality of battery cells 20 in series, parallel, or series-parallel to form a battery module, and then connecting a plurality of battery modules in series, parallel, or series-parallel to form an entirety that is accommodated in the box 10. The battery 100 may further include other structures, for example, a busbar configured to implement electrical connection between the plurality of battery cells 20. Each battery cell 20 may be a secondary battery or a primary battery, such as a lithium-sulfur battery, a sodium-ion battery, or a magnesium-ion battery, but is not limited thereto. The battery cell 20 may be cylindrical, flat, cuboid, or of other shapes.

Referring to FIG. 4, FIG. 4 is a schematic exploded structural view of a battery cell according to some embodiments of this application. The battery cell 20 refers to the smallest unit constituting a battery. As shown in FIG. 4, the battery cell 20 includes an end cover 21, a housing 22, an electrode assembly 23, and other functional components. The end cover 21 is a component that covers an opening of the housing 22 to isolate an internal environment of the battery cell 20 from an external environment. Without limitation, the shape of the end cover 21 may be adapted to the shape of the housing 22 to fit the housing 22. Optionally, the end cover 21 may be made of a material with certain hardness and strength (for example, aluminum alloy), ensuring that the end cover 21 is less prone to deformation during extrusion or collision, thereby enhancing the structural strength and safety performance of the battery cell 20. The end cover 21 may be provided with functional components such as an electrode terminal 21a. The electrode terminal 21a may be configured to electrically connect to the electrode assembly 23 for outputting or inputting electric energy of the battery cell 20. In some embodiments, the end cover 21 may further be provided with a pressure relief mechanism for releasing internal pressure when the internal pressure or temperature of the battery cell 20 reaches a threshold. The material of the end cover 21 may vary, such as copper, iron, aluminum, stainless steel, aluminum alloy, or plastic, and the embodiments of this application impose no specific restrictions. In some embodiments, an insulating member may be provided on the inner side of the end cover 21 to isolate electrical connection components within the housing 22 from the end cover 21, reducing the risk of short circuits. For example, the insulating member may be made of plastic, rubber, or the like. The housing 22 is a component configured to cooperate with the end cover 21 to form the internal environment of the battery cell 20, where the formed internal environment can accommodate the electrode assembly 23, electrolyte, and other components. The housing 22 and the end cover 21 may be independent components, with an opening provided on the housing 22, and the end cover 21 covering the opening to form the internal environment of the battery cell 20. Without limitation, the end cover 21 and the housing 22 may also be integrated; specifically, the end cover 21 and the housing 22 may form a common connection surface before other components are inserted into the housing, and the end cover 21 covers the housing 22 when the interior of the housing 22 needs to be sealed. The housing 22 may have various shapes and sizes, such as a rectangular shape, a cylindrical shape, or a hexagonal prism shape. The shape of the housing 22 may be determined based on the specific shape and size of the electrode assembly 23. The housing 22 may be made of various materials, such as copper, iron, aluminum, stainless steel, aluminum alloy, or plastic, and the embodiments of this application impose no specific restrictions. The electrode assembly 23 is a component in the battery cell 100 where electrochemical reactions occur. The housing 22 may include one or more electrode assemblies 23. The electrode assembly 23 is primarily formed by winding or stacking a positive electrode plate and a negative electrode plate, with a separator typically disposed between the positive electrode plate and the negative electrode plate. The parts of the positive electrode plate and the negative electrode plate with active materials constitute a main body portion of the electrode assembly, while the parts of the positive electrode plate and the negative electrode plate without active materials separately constitute a tab 23a. A positive tab and a negative tab may both be located at one end of the main body portion or at two ends of the main body portion, respectively. During the charging and discharging of the battery, the positive active material and the negative active material react with the electrolyte, and the tab 23a connects to the electrode terminal to form a current loop.

The beneficial effects of this application are further described below with reference to examples.

To make the technical problems solved, technical solutions, and beneficial effects of the embodiments of this application clearer, further detailed descriptions are provided below in conjunction with the examples and drawings. Apparently, the described embodiments are only some but not all of the embodiments of this application. The following description of at least one exemplary embodiment is merely illustrative and is not construed as any limitation on this application or its use. Based on the embodiments of this application, all other embodiments obtained by those of ordinary skill in the art without creative effort fall within the scope of protection of this application.

Unless otherwise specified, the raw materials used in the following examples and comparative examples were obtained commercially.

### 1. Preparation of harmonica tube:

### Example 1

A polyphenylene sulfide resin (commercially available) with a number-average molecular weight of 70000 and a melt index of 100 g/10 min under conditions of 316°C and 10 kg, weighing 9.5 kg, was added to the main feed of a twin-screw extruder. Ethylene-glycidyl methacrylate (commercially available) with a melt index of 7 g/10 min under conditions of 190°C and 2.16 kg, weighing 0.5 kg, was added through a side feed port into the screw. The materials are subjected to melt extrusion, obtaining a polyphenylene sulfide composition for the harmonica tube. The polyphenylene sulfide composition was subjected to a forming process to obtain the harmonica tube. The forming process was melt extrusion molding, with the process parameters set as follows: zone 1 temperature: 110°C, zone 2 temperature: 285°C, zone 3 temperature: 300°C, zone 4 temperature: 305°C, zone 5 temperature: 295°C, zone 6 temperature: 295°C, zone 7 temperature: 300°C, zone 8 temperature: 300°C, zone 9 temperature: 300°C, die temperature: 310°C, and screw rotation speed: 400 rpm. A ratio of screw length to a diameter (L/D) of the twin-screw extruder was 48. The screw was provided with two shear block zones and one reverse thread zone. The angle of the shear block of the screw was 90° + 45°. It is understood that in this example, the total mass of the polyphenylene sulfide resin and ethylene-glycidyl methacrylate was 10 kg, with 0.1 kg corresponding to 1 part by weight. Specific target components for each example and comparative example are detailed in Table 1.

Examples 2 to 7 were similar to Example 1, with the difference being that the mass ratio of the polyphenylene sulfide resin to ethylene-glycidyl methacrylate in Examples 2 to 7 differed from that in Example 1. It should be noted that the total mass of the polyphenylene sulfide resin and ethylene-glycidyl methacrylate in Examples 2 to 7 was the same as that in Example 1.

Examples 8 to 13 were similar to Example 4, with the difference being that the number-average molecular weight and the melt index under conditions of 316°C and 10 kg of the polyphenylene sulfide resin in Examples 8 to 13 differed from those in Example 4.

Examples 14 to 18 were similar to Example 4, with the difference being that the melt index of ethylene-glycidyl methacrylate under conditions of 190°C and 2.16 kg in Examples 14 to 18 differed from that in Example 4.

Example 19 was similar to Example 4, with the difference being that 0.2 parts (0.2 kg) of antioxidant 1098 (N,N'-bis-(3-(3,5-di-tert-butyl-4-hydroxyphenyl)propionyl)hexanediamine, C₄₀H₆₄N₂O₄) was added in Example 19.

Examples 20 to 21 were similar to Example 19, with the difference being that the type and weight parts of the antioxidant added in Examples 20 to 21 differed from those in Example 19. It should be noted that the English name of antioxidant 168 in Example 21 is tris[2,4-di-tert-butylphenyl]phosphite, with a molecular formula of C₄₂H₆₃O₃P.

Examples 22 to 24 were similar to Example 4, with the difference being that the type of toughening agent added in Examples 22 to 24 differed from that in Example 4.

### 2. Testing of number-average molecular weight of polyphenylene sulfide resin:

An osmometer including a measurement cell, a semi-permeable membrane, and an osmotic pressure transducer was used to determine the number-average molecular weight of the polyphenylene sulfide resin. The measurement cell was divided into two parts by the semi-permeable membrane: the upper part was open to the external environment and filled with the solution to be measured, while the lower part was filled with a solvent isolated from the external environment, providing a negative osmotic pressure corresponding to the osmotic concentration of the sample solution. A stainless steel diaphragm installed in the lower part of the measurement cell exhibited slight bending due to the negative osmotic pressure, and this bending motion was recorded by a pressure regulation system and converted into an electrical signal. The magnitude of this signal was quantitatively related to the osmotic pressure of the solution. Solutions of three or more different concentrations were injected into the upper part of the measurement cell, and based on the scale of movement of the recording pen on the recording paper, the osmotic pressure corresponding to each solution was obtained as the height (π) of the solvent column in centimeters. The measured π value was divided by the concentration C, and a plot of π/C versus C was used to calculate the number-average molecular weight of the polyphenylene sulfide resin.

### 3. Sample testing:

Harmonica tubes prepared in each example were made into test specimens with a length of 150 mm, an end width of 20 mm, and a thickness of 4 mm. The tensile strength and elongation at break of the specimens were tested according to ISO 527-2:2012 "Plastics - Determination of tensile properties", the flexural strength and flexural modulus were tested according to ISO 178:2019 "Plastics - Determination of flexural properties", the notched Izod impact strength was tested according to ISO 180 "Plastics - Determination of Izod impact strength", and the thermal conductivity was measured according to ASTM D5930-17 "Standard Test Method for Thermal Conductivity of Plastics by Means of a Transient Line-Source Technique." The specimens were pre-dried at 75°C for 4 h, then placed in a test environment with a constant initial temperature. A line-source probe was placed at the center of the specimen to precisely record temperature transients. The test apparatus was heated with a specific temperature increment, and the thermal conductivity of the specimen was calculated based on the relationship between the heating increment and the temperature transient of the polymer. The testing process for other examples was the same.

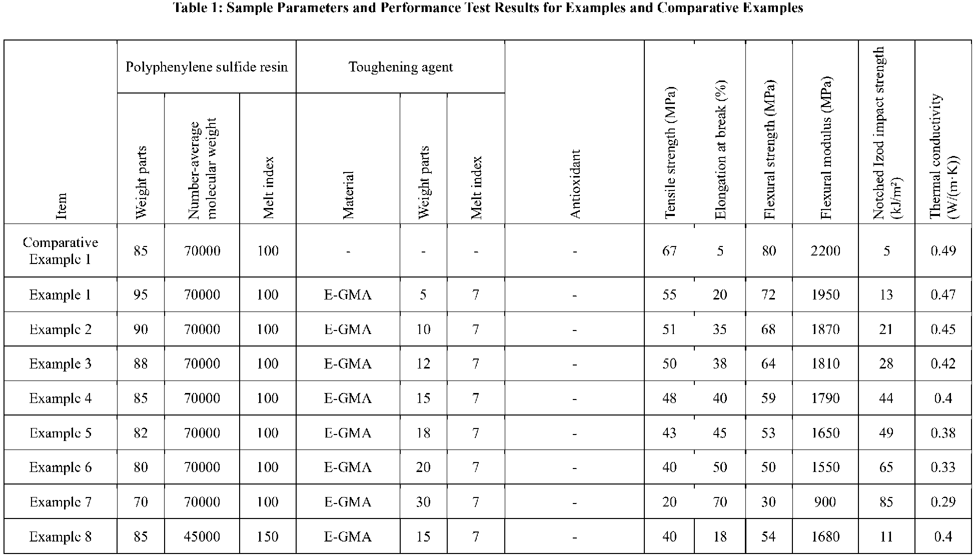

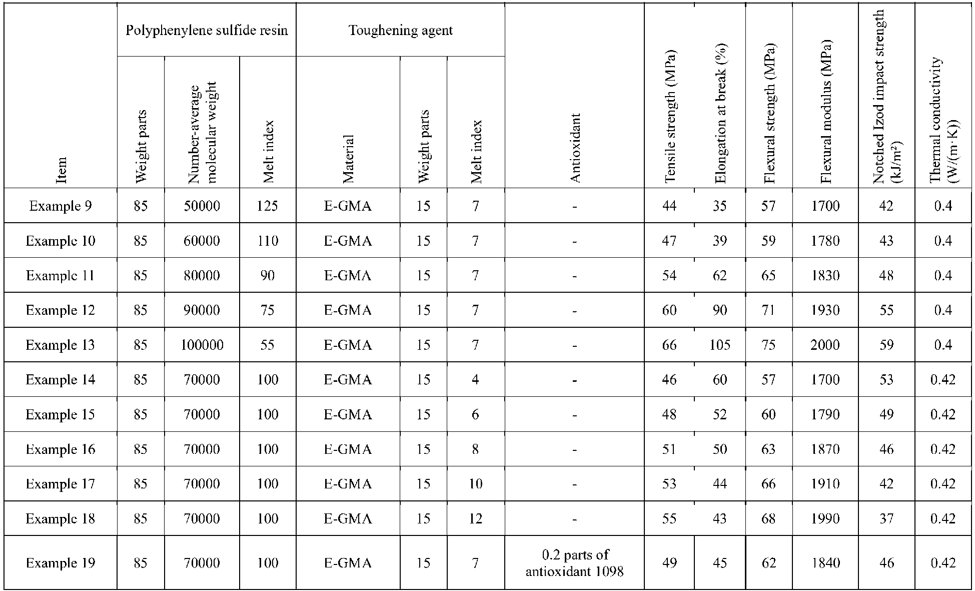

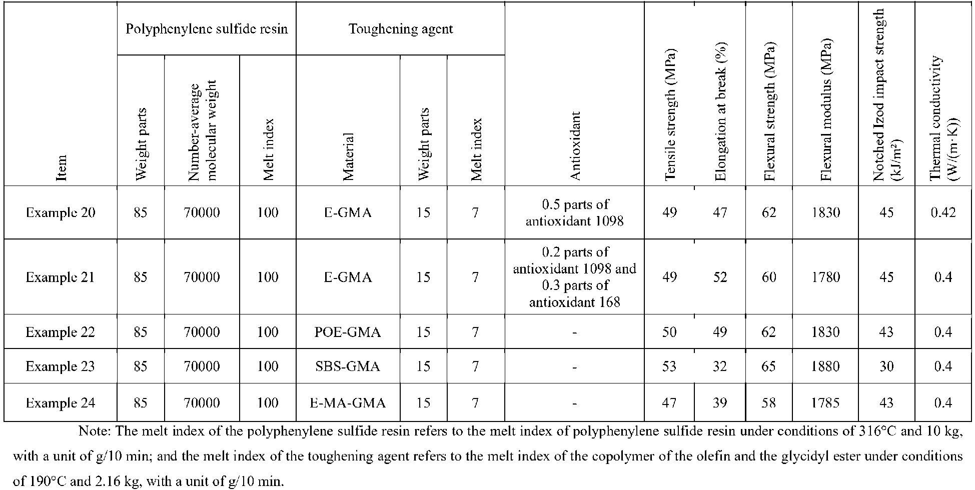

Results indicate that Comparative Example 1, without the toughening agent, exhibited low elongation at break and notched Izod impact strength, leading to issues such as material breakage or poor extrusion flow during extrusion molding, and the product was prone to cracking under pressure during use. Compared to Comparative Example 1, the harmonica tube material in Example 4 showed significant improvements in elongation at break and notched Izod impact strength, while maintaining relatively high values for tensile strength, flexural strength, flexural modulus, and thermal conductivity. This facilitates reducing issues such as material breakage or poor extrusion flow during extrusion molding, lowers the risk of cracking under pressure during use, and enhances production capacity and product quality.

From Examples 1 to 7, as the mass ratio of the toughening agent to the polyphenylene sulfide resin increased, the elongation at break and notched Izod impact strength of the harmonica tube material significantly increased, while tensile strength, flexural strength, flexural modulus, and thermal conductivity decreased to some extent. Therefore, regulating the mass ratio of the polyphenylene sulfide resin to the toughening agent can more effectively reduce issues such as material breakage or poor extrusion flow during extrusion molding, lower the risk of cracking under pressure during use, and enhance production capacity and product quality.

From Examples 4 and 8 to 13, as the number-average molecular weight of the polyphenylene sulfide resin increased, the melt index decreased, and the elongation at break, notched Izod impact strength, tensile strength, flexural strength, flexural modulus, and thermal conductivity of the harmonica tube material significantly improved. Therefore, regulating the number-average molecular weight of the polyphenylene sulfide resin can more effectively reduce issues such as material breakage or poor extrusion flow during extrusion molding, lower the risk of cracking under pressure during use, and enhance production capacity and product quality.

From Examples 4 and 14 to 18, as the melt index of the toughening agent increased, the elongation at break, notched Izod impact strength, tensile strength, flexural strength, flexural modulus, and thermal conductivity of the harmonica tube material exhibited certain fluctuations. Therefore, regulating the melt index of the toughening agent can more effectively reduce issues such as material breakage or poor extrusion flow during extrusion molding, lower the risk of cracking under pressure during use, and enhance production capacity and product quality.

From Examples 4 and 19 to 21, when other additives were included, the elongation at break, notched Izod impact strength, tensile strength, flexural strength, flexural modulus, and thermal conductivity of the harmonica tube material exhibited certain fluctuations. Therefore, regulating the type and proportion of additives can more effectively reduce issues such as material breakage or poor extrusion flow during extrusion molding, lower the risk of cracking under pressure during operational conditions, and enhance production capacity and product quality.

From Examples 4 and 22 to 24, when other copolymers of the olefin and the glycidyl ester were used, the elongation at break, notched Izod impact strength, tensile strength, flexural strength, flexural modulus, and thermal conductivity of the harmonica tube material exhibited certain fluctuations. Therefore, regulating the type of copolymer of the olefin and the glycidyl ester can more effectively reduce issues such as material breakage or poor extrusion flow during extrusion molding, lower the risk of cracking under pressure during use, and enhance production capacity and product quality.

In several embodiments provided by this application, it should be understood that the disclosed systems, devices, and methods may be implemented in other ways. For example, the described apparatus embodiment is merely an example. The unit division is merely logical function division and may involve other divisions in actual implementation. For example, a plurality of units or components may be combined or integrated into another system, or some features may be ignored or not performed. Additionally, the displayed or discussed mutual couplings, direct couplings, or communication connections may be implemented through some interfaces. The indirect couplings or communication connections between the apparatuses or units may be implemented in electrical, mechanical, or other forms.

Furthermore, in various embodiments of this application, each functional unit may be integrated into one processing unit, or each unit may exist physically independently, or two or more units may be integrated into one unit. The integrated unit may be implemented in the form of hardware or a software functional unit.

The above descriptions are only embodiments of this application and are not intended to limit the patent scope of this application. Any equivalent structural or procedural transformations made using the content of the specification and drawings of this application, or direct or indirect application in other related technical fields, are similarly included within the patent protection scope of this application.

## Claims

1. A harmonica tube, wherein a material of the harmonica tube comprises a polyphenylene sulfide composition, the polyphenylene sulfide composition comprising a polyphenylene sulfide resin and a toughening agent; wherein the toughening agent comprises a copolymer of an olefin and a glycidyl ester.

2. The harmonica tube according to claim 1, wherein a number-average molecular weight of the polyphenylene sulfide resin is greater than or equal to 50000.

3. The harmonica tube according to claim 2, wherein the number-average molecular weight of the polyphenylene sulfide resin satisfies a range of 50000 to 10000.

4. The harmonica tube according to any one of claims 1 to 3, wherein the polyphenylene sulfide composition comprises, by weight parts, 80 to 90 parts of the polyphenylene sulfide resin and 10 to 20 parts of the toughening agent.

5. The harmonica tube according to any one of claims 1 to 4, wherein a melt index of the polyphenylene sulfide resin under conditions of 316°C and 10 kg satisfies a range of 55 g/10 min to 125 g/10 min.

6. The harmonica tube according to any one of claims 1 to 5, wherein the copolymer of the olefin and the glycidyl ester comprises one or more of ethylene-glycidyl methacrylate, ethylene-methyl acrylate-glycidyl methacrylate terpolymer, ethylene-octene copolymer grafted with glycidyl methacrylate, and styrene-butadiene-styrene block copolymer grafted with glycidyl methacrylate.

7. The harmonica tube according to any one of claims 1 to 6, wherein a melt index of the copolymer of the olefin and the glycidyl ester under conditions of 190°C and 2.16 kg satisfies a range of 4 g/10 min to 10 g/10 min.

8. The harmonica tube according to any one of claims 1 to 7, wherein the polyphenylene sulfide composition further comprises an antioxidant.

9. The harmonica tube according to claim 8, wherein the polyphenylene sulfide composition further comprises, by weight parts, less than or equal to 0.5 parts of the antioxidant.

10. The harmonica tube according to claim 9, wherein the polyphenylene sulfide composition further comprises, by weight parts, 0.2 to 0.5 parts of the antioxidant.

11. The harmonica tube according to claim 9 or 10, wherein the antioxidant comprises one or both of N,N'-bis-(3-(3,5-di-tert-butyl-4-hydroxyphenyl)propionyl)hexanediamine and tris[2,4-di-tert-butylphenyl]phosphite.

12. A preparation method of a harmonica tube, comprising:
providing a polyphenylene sulfide composition; and
performing a forming process on the polyphenylene sulfide composition to obtain the harmonica tube;
wherein the polyphenylene sulfide composition comprises a polyphenylene sulfide resin and a toughening agent; and the toughening agent comprises a copolymer of an olefin and a glycidyl ester.

13. The preparation method of a harmonica tube according to claim 12, wherein the performing a forming process on the polyphenylene sulfide composition comprises:
adding the polyphenylene sulfide composition to a twin-screw extruder for extrusion molding.

14. The preparation method of a harmonica tube according to claim 13, wherein:
a screw rotation speed of the twin-screw extruder is 300 rpm to 500 rpm; and/or
zone temperature settings of the twin-screw extruder comprise: zone 1 temperature of 100°C to 120°C, zone 2 temperature of 280°C to 290°C, zone 3 temperature of 290°C to 310°C, zone 4 temperature of 300°C to 310°C, zone 5 temperature of 290°C to 300°C, zone 6 temperature of 290°C to 300°C, zone 7 temperature of 300°C to 310°C, zone 8 temperature of 300°C to 310°C, zone 9 temperature of 290°C to 310°C, and die temperature of 300°C to 320°C.

15. A liquid cooling plate, wherein the liquid cooling plate comprises the harmonica tube according to any one of claims 1 to 11 or a harmonica tube prepared by the preparation method according to any one of claims 12 to 14.

16. A battery, comprising the liquid cooling plate according to claim 15.

17. An electric apparatus, comprising the battery according to claim 16.
